Europäisches Patentamt

European Patent Office

Office européen des brevets

(11) Publication number: **0 360 933**
**A1**

## EUROPEAN PATENT APPLICATION

(21) Application number: 88308991.4

(51) Int. Cl.5: **H02H 9/04**

(22) Date of filing: 28.09.88

(43) Date of publication of application:
04.04.90 Bulletin 90/14

(84) Designated Contracting States:
AT BE CH DE ES FR GB GR IT LI LU NL SE

(71) Applicant: **Semitron Cricklade Limited**
**Chelworth Industrial Estate**
**Cricklade Wiltshire(GB)**

(72) Inventor: **Howard, Christopher George**
**Priory Cottage Wootton**
**Bassett Wiltshire SN 66 Hq(GB)**
Inventor: **Hempleman, Mirka**
**14/16 Widham**
**Purton Swindon Wiltshire(GB)**

(54) **An improved transient suppression device.**

(57) A transient suppression device involves a composite device consisting of two breakdown diodes (LB, HB) in series or one breakover diode (LB) in series with a Zener or Foldback diode (FZ).

# FIG 5

## AN IMPROVED TRANSIENT SUPPRESSION DEVICE

This invention relates to a transient suppression device according to the preamble of claim 1. Transient suppressor devices are known. for example. from EP-A-0 088 179 (Foldback device) or from EP-A-0 123 126. Telecommunication systems have to be protected from transient voltage surges. such as those derived from lightning.

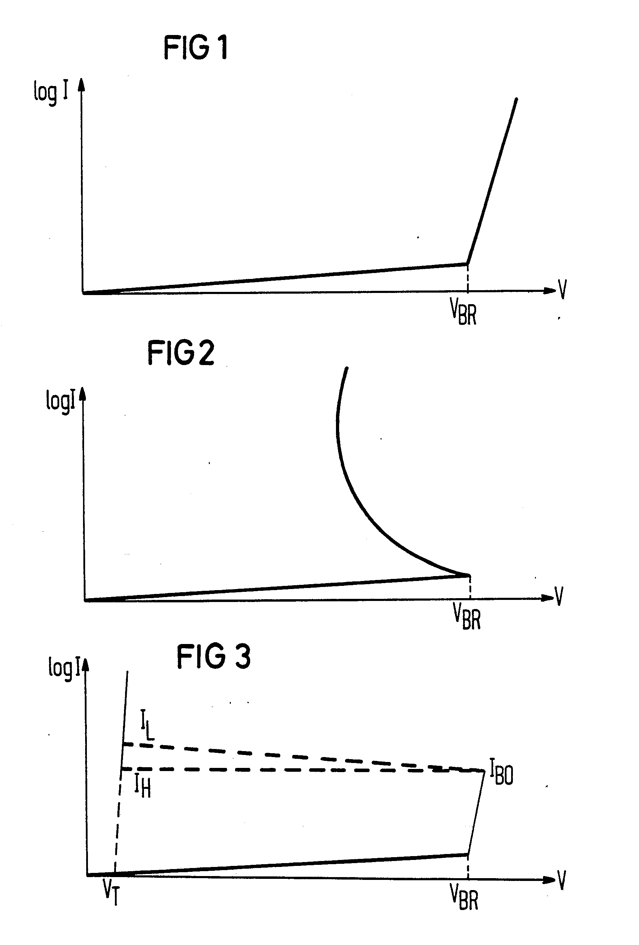

Transient suppression semiconductor devices can be separated into three classes:- zener diodes. foldback diodes and breakover diodes. The breakdown characteristics of these devices are shown in Figures 1. 2 and 3. Each type of device can be made in unidirectional or bidirectional form.

The zener diode breaks down at $V_{BR}$ and then exhibits a positive increase in voltage with increasing avalanche current. The foldback diode exhibits negative resistance over part of its V I characteristics. typically reaching a minimum clamping voltage $V_{FB}$, whose value is some 60 % of the breakdown voltage $V_{BR}$. The breakover diode exhibits a characteristic very similar to that shown by a Gas Discharge Tube. The device behaves as a zener diode until a critical avalanche current is reached ($I_{BO}$). It then switches to a low voltage on-state condition ($V_T$).

In general the zener diodes are based on a single pn junction. foldback diodes on a npn structure and breakover diodes on the thyristor or npnp structure. The zener diode is mainly used in low power low cost applications where its high clamp voltage presents no problems. The foldback diode is now used in volume in Telecom main distribution frame (MDF) protection; where its high power capability is of major importance. The breakover diode has, however, potentially a higher power capability than the foldback diode because of the low value of $V_T$, the on-state voltage. It has not been used in volume for MDF protection for reasons that will now be discussed.

The breakover diode, which is based on thyristor technology. switches to a low resistance on-state providing the transient will source a current greater or equal to the latching current, $I_L$. When the transient has passed the device will remain switched on if the current exceeds the holding current $I_H$. The power supply to the electronics that the breakover diode (BOD) is protecting must not be capable of sourcing $I_H$, otherwise the system will never return to its normal operating state. For practical reasons $I_H$ should be as high as possible to allow as large a system as possible to be operated off a single power supply.

By changing the design of the chip those skilled in the art of making breakover diodes can vary $I_H$ and $I_{BO}$. There are at present, however, technological limitations to the $I_H$ value that can be obtained in practical devices. The energy dissipated in the device before it switches on is a function of the power dissipated before switching ($V_{BO} \times I_{BO}$) as well as the switching time. If this energy is excessive the device will be destroyed. High values of $I_H$ have so far been associated with excessive energy being dissipated prior to turn-off, as a result of either higher values of $I_{BO}$ or of an increase in switching time, or both effects.

The invention described here according to claims 1. 2 involves a composite device consisting of two breakover diodes in series or one breakover diode in series with a zener or foldback diode. Both of these assemblies can be used to overcome the holding current problem. These techniques have been developed specifically for telecommunications applications, but are capable of wider application.

In order that the invention may be more fully understood. embodiments thereof and their operating characteristics will be described by way of illustrative examples, reference being had to the accompanying drawings wherein:

Figure 1 shows the breakdown characteristics of a zener diode,

Figure 2 shows the breakdown characteristics of a Foldback diode,

Figure 3 shows the breakdown characteristics of a breakdown diode,

Figure 4 shows an embodiment of a first solution to the holding current $I_H$ problem consisting of a low $I_H$ breakover diode and a Foldback or zener diode in series,

Figure 5 shows an embodiment of a second solution to the holding current $I_H$ problem consisting of a low $I_H$ breakdown diode and a high $I_H$ breakdown diode in series.

Many telecommunication applications involve an exchange operating voltage of the order of 57 volts. On top of this is superimposed an AC ringing tone. For such applications a minimum holding current in the range 200-300mA is desirable. This minimum holding current should be obtained throughout the operating temperature range. The breakdown voltage $V_{BR}$ of the device is in the range 200-350 volts.

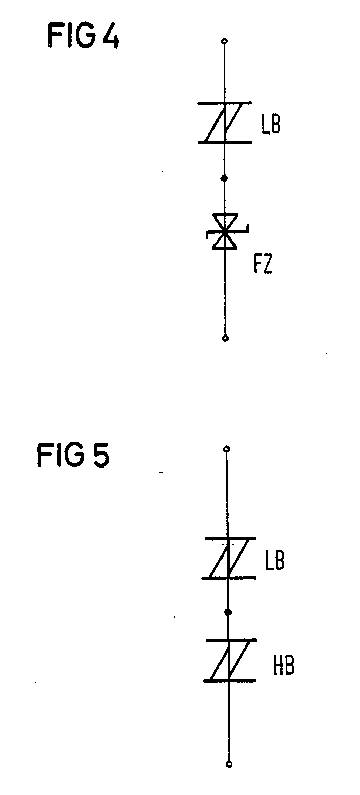

The first solution to the problem of how to get a high holding current is to eliminate the requirement. A zener diode or foldback diode FZ is placed in series with a breakover diode device LB (Figure 4). The zener or foldback diode FB is selected so that its breakdown voltage $V_{BR}$ (zener) or foldback voltage $V_{FB}$ - (foldback diode) is never lower than the exchange operating voltage. The breakdown voltage of the breakover diode LB is selected so that the sum of the breakdown voltage of the breakover diode LB and

2

that of the zener or foldback diode FZ exceeds the required minimum value. The main advantages of this system over existing foldback diodes are as follows:

1. much greater difference between $V_{BR}$ and $V_{FB}$ available than from simple foldback diode:

2. reduction in silicon area necessary to give the same transient absorption performance. This occurs because the breakover diode LB switches on to a very low voltage. Hence a fast switching breakover diode LB need only have very small silicon area.

The second solution to the problem is to use two thyristors LB, HB in series (Figure 5). One, a low voltage device HB, has a breakdown voltage that just exceeds the exchange operating voltage. The other device LB has a breakdown voltage so that the sum of the two breakdown voltages exceed the minimum voltage. The first low voltage device HB has a high holding current capable of meeting the requirement of 200-300mA. As it is a low voltage device HB, reasonably high values of $I_{BO}$ can be used without giving excessive switching energies. The series device LB can have both low $I_H$ and $I_{BO}$. On receipt of a transient this second device LB turns on immediately, followed rapidly by the first device HB. When the transient has passed the high holding current device HB turns off allowing the power supply to stabilise. The second breakover diode LB then turns off as the current through it falls to zero due to the blocking series device.

The main advantages of this system over existing systems and the previously mentioned device (Figure 4) are:

(i) very low power dissipation in the on-state of two series thyristors LB, HB allows lower silicon areas to be used to absorb a given transient, than required for zener diodes, foldback diodes FZ and the composite device (Figure 4) discussed in the previous section;

(ii) the problems of holding current with existing breakover diodes are overcome.

(iii) It has been found empirically that, if a high holding current device is placed in series with a low holding current device, the resulting composite device has even better parameters than predicted. In addition to inheriting the best features of each type of device, the composite device appears to be capable of conducting a larger surge current than the high holding current device can conduct alone. It is believed that the turning-on of the low holding current device improves the turn-on parameters of the slower device in series with it. Below is appended characteristics of 2 types of 70 volt breakdown breakover diodes and the characteristics of the composite device when they are placed in series.

| | 70 volt Low $I_H$ | 70 volt High $I_H$ | 140 volt Composite |
|---|---|---|---|
| Holding current $I_H$ | 5mA | 200mA | 200mA |
| Breakover current $I_{BO}$ | 2mA | 100mA | 2mA |
| Switching time | 1$\mu$sec | 4$\mu$sec | less than 1$\mu$sec |
| Max. current CCITT 8 20$\mu$sec Standard lightning pulse | 2000 A | 800A | 1000A |

## Claims

1. Transient suppression device comprising a thyristor characterised by a composite device consisting of a thyristor (LB) in series with a Zener or Foldback diode (FZ).

2. Transient suppression device comprising a thyristor characterised by a composite device consisting of a first thyristor (LB) in series with a second thyristor (HB) the second thyristor (HB) having higher holding current than the first thyristor (LB).

3. Transient suppression system according to claim 1 or 2, characterised in that the sum of the breakdown voltage of the (first) thyristor (LB) and the breakdown voltage of the Zener or Foldback diode (FZ) or of the second thyristor (HB) exceeds a required minimum voltage value.

4. Transient suppression system according to one of the claims 1 to 3, characterised in that the breakdown voltage of the Zener or Foldback diode (FZ) or of the second thyristor (HB) is never lower than the operating voltage.

FIG 1

FIG 2

FIG 3

## FIG 4

LB

FZ

## FIG 5

LB

HB

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0186873 (NIPPON TELEGRAPH AND TELEPHONE CORPORATION) <br> * page 7, line 21 - page 8, line 11 * <br> --- | 1-4 | H02H9/04 |
| X | US-A-4677518 (POWER INTEGRITY CORPORATION) <br> * column 3, line 61 - column 4, line 28 * <br> --- | 1-4 | |
| A | US-A-3436601 (DANFOSS) <br> * column 3, line 4 - column 21 * <br> --- | 1-4 | |
| D,A | EP-A-0123126 (NORTHERN TELECOM MLIMITED) <br> --- | | |
| D,A | EP-A-0088179 (SEMITRON CRICKLADE LIMITED) <br> ----- | | |

TECHNICAL FIELDS SEARCHED (Int. Cl.4)

H02H

The present search report has been drawn up for all claims

| Place of search | Date of completion of the search | Examiner |
|---|---|---|
| THE HAGUE | 22 MAY 1989 | LIBBERECHT L.A. |

EPO FORM 1503 03.82 (P0401)